# EUROPEAN PATENT APPLICATION

(11) **EP 4 797 828 A1**
(43) Date of publication of application: **26.08.2026**
(21) Application number: 24884694.1
(22) Date of filing: 29.10.2024
(51) Int. Cl.: H04W 72/04, H04W 72/23

(54) **UPLINK TRANSMISSION METHOD AND COMMUNICATION APPARATUS**

(30) Priority: 03.11.2023 CN 202311462035
(71) Applicant: HUAWEI TECHNOLOGIES CO., LTD., Shenzhen 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: Goddar, Heinz J.
(86) International application number: PCT/CN2024/127944
(87) International publication number: WO 2025/092691

(57) **Abstract**

An uplink transmission method and a communication apparatus are provided. In the method, a terminal device determines that an association relationship between two SRS resource sets configured by a network device for the terminal device and an SBFD time unit/a non-SBFD time unit is a first association relationship or a second association relationship, where the first association relationship is that a first SRS resource set is associated with the SBFD time unit and a second SRS resource set is associated with the non-SBFD time unit, and the second association relationship is that the first SRS resource set is associated with the non-SBFD time unit and the second SRS resource set is associated with the SBFD time unit. Then, the terminal device sends a PUSCH repetition in a corresponding time unit based on an SRS resource set associated with the time unit. According to the method, it can be ensured that different types of time units are associated with different SRS resource sets, to ensure that PUSCH repetitions are sent in the different types of time units by using different spatial domain parameters.

## Description

This application claims priority to Chinese Patent Application No. 202311462035.2, filed with the China National Intellectual Property Administration on November 3, 2023 and entitled "UPLINK TRANSMISSION METHOD AND COMMUNICATION APPARATUS", which is incorporated herein by reference in its entirety.

### TECHNICAL FIELD

This application relates to the communication field, and more specifically, to an uplink transmission method and a communication apparatus.

### BACKGROUND

With rapid development of the fifth generation mobile communication technology, namely, new radio (new radio, NR), various communication requirements have emerged. To meet requirements of emerging services, a subband full duplex (subband full duplex, SBFD) solution is proposed to improve uplink coverage of a time division duplex (time division duplex, TDD) system. Subband full duplex means that in the TDD system, a network device can implement both receiving and sending in one slot or on one orthogonal frequency division multiplexing (orthogonal frequency division multiplexing, OFDM) symbol by using different subbands for uplink transmission and downlink transmission.

In the TDD system, a protocol allows different spatial domain parameters to be used for different repetitions when a terminal device sends physical uplink shared channel (physical uplink shared channel, PUSCH) repetitions. An example in which the PUSCH repetition is a PUSCH repetition type A is used for description. Specifically, the network device may configure two sounding reference signal (sounding reference signal, SRS) resource sets for the terminal device. The terminal device may associate the two SRS resource sets with different slots based on an existing SRS resource set mapping pattern. The existing SRS resource set mapping pattern includes a cyclic mapping manner, a sequential mapping manner, and the like. Then, the terminal device sends the PUSCH repetition in a corresponding slot based on a spatial domain parameter determined based on an SRS resource set associated with each slot.

Because an SBFD slot and an uplink slot (or a flexible slot) correspond to different channel environments and interference environments, if the PUSCH repetitions need to be sent in the SBFD slot and the uplink slot (or the flexible slot), optimal spatial domain parameters used for sending the PUSCH repetitions in the SBFD slot and the uplink slot (or the flexible slot) are different. Currently, SBFD slots and non-SBFD slots may be flexibly configured, for example, configured as XXXXU and DXXXU, where X represents an SBFD slot, U represents an uplink slot, and D represents a downlink slot. Based on the existing SRS resource set mapping pattern, it cannot be ensured that the SBFD slot and the non-SBFD slot are respectively associated with different SRS resource sets. In other words, it cannot be ensured that the PUSCH repetitions are sent in the SBFD slot and the non-SBFD slot by using different spatial domain parameters.

### SUMMARY

This application provides an uplink transmission method and a communication apparatus. According to the method, PUSCH repetitions can be sent in an SBFD slot and a non-SBFD slot by using different spatial domain parameters.

According to a first aspect, an uplink transmission method is provided. The method may be performed by a terminal device, or may be performed by a component (such as a chip or a circuit) of the terminal device. This is not limited in this application.

The method includes: receiving first signaling from a network device, where the first signaling indicates to send a first signal, and the first signal is carried on a physical uplink shared channel PUSCH; determining that an association relationship between a first sounding reference signal SRS resource set/a second SRS resource set and a subband full duplex SBFD time unit/a non-SBFD time unit is a first association relationship or a second association relationship, where the first SRS resource set and the second SRS resource set are two SRS resource sets configured by the network device for a terminal device, the first association relationship is that the first SRS resource set is associated with the SBFD time unit, and the second SRS resource set is associated with the non-SBFD time unit, and the second association relationship is that the first SRS resource set is associated with the non-SBFD time unit, and the second SRS resource set is associated with the SBFD time unit; and sending the first signal in the SBFD time unit based on an SRS resource set associated with the SBFD time unit, and/or sending the first signal in the non-SBFD time unit based on an SRS resource set associated with the non-SBFD time unit.

In the foregoing technical solutions, the terminal device can ensure, based on the first association relationship or the second association relationship, that the SBFD time unit and the non-SBFD time unit are respectively associated with different SRS resource sets, to ensure that the first signal is sent in the SBFD time unit and the non-SBFD time unit by using different spatial domain parameters.

In some implementations of the first aspect, determining that the association relationship between the first SRS resource set/the second SRS resource set and the SBFD time unit/the non-SBFD time unit is the first association relationship or the second association relationship includes: receiving first information from the network device, where the first information indicates the first association relationship or the second association relationship; and determining, based on the first information, that the association relationship between the first SRS resource set/the second SRS resource set and the SBFD time unit/the non-SBFD time unit is the first association relationship or the second association relationship.

In some implementations of the first aspect, the first information is carried in second signaling, and the second signaling is radio resource control RRC signaling; or the first information is carried in an SRS resource set indication information field in the first signaling, and the first signaling is downlink control information DCI.

In the foregoing technical solutions, the terminal device may indicate, based on an RRC configuration or DCI of the network device, the association relationship between the first SRS resource set/the second SRS resource set and the SBFD time unit/the non-SBFD time unit.

In some implementations of the first aspect, the first SRS resource set includes a first field and/or the second SRS resource set includes a second field, the first field indicates that the first SRS resource set is associated with the SBFD time unit or the non-SBFD time unit, the second field indicates that the second SRS resource set is associated with the SBFD time unit or the non-SBFD time unit, and the time units associated with the first SRS resource set and the second SRS resource set are of different types. Determining that the association relationship between the first SRS resource set/the second SRS resource set and the SBFD time unit/the non-SBFD time unit is the first association relationship or the second association relationship includes: determining, based on the first field and/or the second field, that the association relationship between the first SRS resource set/the second SRS resource set and the SBFD time unit/the non-SBFD time unit is the first association relationship or the second association relationship.

In the foregoing technical solutions, a field may be added to the first SRS resource set and/or the second SRS resource set to indicate the association relationship between the first SRS resource set/the second SRS resource set and the SBFD time unit/the non-SBFD time unit.

In some implementations of the first aspect, when a value of the first field is a first value, it indicates that the first SRS resource set is associated with the SBFD time unit, and when the value of the first field is a second value, it indicates that the first SRS resource set is associated with the non-SBFD time unit. When a value of the second field is the first value, it indicates that the second SRS resource set is associated with the SBFD time unit, and when the value of the second field is the second value, it indicates that the second SRS resource set is associated with the non-SBFD time unit.

In some implementations of the first aspect, the value of the first field is different from the value of the second field.

In some implementations of the first aspect, determining that the association relationship between the first SRS resource set/the second SRS resource set and the SBFD time unit/the non-SBFD time unit is the first association relationship or the second association relationship includes: if the first SRS resource set is an SRS resource set dedicated for SBFD, determining that the association relationship between the first SRS resource set/the second SRS resource set and the SBFD time unit/the non-SBFD time unit is the first association relationship; or if the second SRS resource set is an SRS resource set dedicated for SBFD, determining that the association relationship between the first SRS resource set/the second SRS resource set and the SBFD time unit/the non-SBFD time unit is the second association relationship.

In the foregoing technical solutions, the SRS resource set dedicated for SBFD may be defined. The SRS resource set is associated only with the SBFD time unit, and the other SRS resource set is associated only with the non-SBFD time unit.

In some implementations of the first aspect, the method further includes: receiving second information from the network device, where the second information indicates to transmit the first signal in a first transmission manner or a second transmission manner, the first transmission manner indicates to send the first signal in the SBFD time unit or the non-SBFD time unit, and the second transmission manner indicates to send the first signal in the SBFD time unit and the non-SBFD time unit; and determining, based on the second information, to transmit the first signal in the first transmission manner or the second transmission manner.

In the foregoing technical solutions, a transmission manner 1 and a transmission manner 2 may be dynamically switched based on the second information, to improve signal transmission flexibility.

In some implementations of the first aspect, the second information is carried in the SRS resource set indication information field in the first signaling, and the first signaling is downlink control information DCI.

In the foregoing technical solutions, the SRS resource set indication information field in the DCI may be reinterpreted to indicate the second information without increasing a length of the DCI.

In some implementations of the first aspect, the method further includes: receiving third information from the network device, where the third information indicates to transmit the first signal in the first transmission manner, or the third information indicates to transmit the first signal in the second transmission manner, or the third information indicates to transmit the first signal based on the second information.

In the foregoing technical solutions, the network device may semi-statically configure three different transmission manners based on the third information.

In some implementations of the first aspect, the third information is carried in the second signaling, and the second signaling is radio resource control RRC signaling.

According to a second aspect, an uplink transmission method is provided. The method may be performed by a network device, or may be performed by a component (such as a chip or a circuit) of the network device. This is not limited in this application.

The method includes: sending first signaling to a terminal device, where the first signaling indicates to send a first signal, and the first signal is carried on a physical uplink shared channel PUSCH; and receiving the first signal in a subband full duplex SBFD time unit, and/or receiving the first signal in a non-SBFD time unit, where the first signal received in the SBFD time unit is transmitted based on one sounding reference signal SRS resource set associated with the SBFD time unit in two SRS resource sets configured for the terminal device, and the first signal received in the non-SBFD time unit is transmitted based on one SRS resource set associated with the non-SBFD time unit in the two SRS resource sets, where the two SRS resource sets include a first SRS resource set and a second SRS resource set, and an association relationship between the two SRS resource sets and the SBFD time unit and the non-SBFD time unit is a first association relationship or a second association relationship, where the first association relationship is that the first SRS resource set is associated with the SBFD time unit, and the second SRS resource set is associated with the non-SBFD time unit; and the second association relationship is that the first SRS resource set is associated with the non-SBFD time unit, and the second SRS resource set is associated with the SBFD time unit.

For beneficial effects of the second aspect, refer to the descriptions of the first aspect. Details are not described herein again.

In some implementations of the second aspect, the method further includes: sending first information to the terminal device, where the first information indicates the first association relationship or the second association relationship.

In some implementations of the second aspect, the first information is carried in second signaling, and the second signaling is radio resource control RRC signaling; or the first information is carried in an SRS resource set indication information field in the first signaling, and the first signaling is downlink control information DCI.

In some implementations of the second aspect, the first SRS resource set includes a first field and/or the second SRS resource set includes a second field, the first field indicates that the first SRS resource set is associated with the SBFD time unit or the non-SBFD time unit, the second field indicates that the second SRS resource set is associated with the SBFD time unit or the non-SBFD time unit, and the time units associated with the first SRS resource set and the second SRS resource set are of different types.

In some implementations of the second aspect, when a value of the first field is a first value, it indicates that the first SRS resource set is associated with the SBFD time unit, and when the value of the first field is a second value, it indicates that the first SRS resource set is associated with the non-SBFD time unit. When a value of the second field is the first value, it indicates that the second SRS resource set is associated with the SBFD time unit, and when the value of the second field is the second value, it indicates that the second SRS resource set is associated with the non-SBFD time unit.

In some implementations of the second aspect, the value of the first field is the same as the value of the second field.

In some implementations of the second aspect, the first SRS resource set is an SRS resource set dedicated for SBFD; or the second SRS resource set is an SRS resource set dedicated for SBFD.

In some implementations of the second aspect, the method further includes: sending second information to the terminal device, where the second information indicates to transmit the first signal in a first transmission manner or a second transmission manner, the first transmission manner indicates to send the first signal in the SBFD time unit or the non-SBFD time unit, and the second transmission manner indicates to send the first signal in the SBFD time unit and the non-SBFD time unit.

In some implementations of the second aspect, the second information is carried in the SRS resource set indication information field in the first signaling, and the first signaling is downlink control information DCI.

In some implementations of the second aspect, the method further includes: sending third information to the terminal device, where the third information indicates to transmit the first signal in the first transmission manner, or the third information indicates to transmit the first signal in the second transmission manner, or the third information indicates to transmit the first signal based on the second information.

In some implementations of the second aspect, the third information is carried in the second signaling, and the second signaling is radio resource control RRC signaling.

According to a third aspect, a communication apparatus is provided. The communication apparatus is configured to perform the method provided in the first aspect or the second aspect. Specifically, the communication apparatus may include units and/or modules configured to perform the method in the first aspect or any implementation of the first aspect, or include units and/or modules configured to perform the method in the second aspect or any implementation of the second aspect, for example, a processing unit and/or a transceiver unit.

In an implementation, the communication apparatus is a device (for example, a terminal device or a network device). When the communication apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a terminal device or a network device). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method in the first aspect or any implementations of the first aspect or perform the method in the second aspect or any implementations of the second aspect.

In an implementation, the communication apparatus is a device (for example, a terminal device or a network device).

In another implementation, the apparatus is a chip, a chip system, or a circuit used in a device (for example, a terminal device or a network device).

According to a fifth aspect, this application provides a processor, configured to perform the method in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code includes instructions for performing the method in the first aspect or any implementation of the first aspect, or includes instructions for performing the method in the second aspect or any implementation of the second aspect.

According to a seventh aspect, a computer program product that includes instructions is provided. When the computer program product is run on a computer, the computer is enabled to perform the method in the first aspect or any implementation of the first aspect, or the computer is enabled to perform the method in the second aspect or any implementation of the second aspect.

According to an eighth aspect, a chip is provided. The chip includes a processor and a communication interface. The processor reads, through the communication interface, instructions stored in a memory, to perform the method according to the first aspect or any implementation of the first aspect, or perform the method according to the second aspect or any implementation of the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method in the first aspect or any implementation of the first aspect or perform the method in the second aspect or any implementation of the second aspect.

According to a ninth aspect, a communication system is provided, including the foregoing terminal device and the foregoing network device.

### BRIEF DESCRIPTION OF DRAWINGS

FIG. 1 is a diagram of a communication system 100 according to an embodiment of this application;
FIG. 2 is a diagram of time-frequency division in a typical SBFD solution;
FIG. 3 is a diagram of transmission of a PUSCH repetition type B;
FIG. 4A to FIG. 4C are diagrams of an SBFD dedicated uplink and downlink slot configuration;
FIG. 5A to FIG. 5F are diagrams of an association relationship, obtained based on different SRS resource set mapping patterns, between a first SRS resource set and a second SRS resource set and K repetitions;
FIG. 6 is a diagram in which a TRP 1 and a TRP 2 respectively receive PUSCHs associated with different SRS resource sets in an mTRP scenario;
FIG. 7 is a schematic flowchart of an uplink transmission method 700 according to this application;
FIG. 8A to FIG. 8C are diagrams of transmitting a first signal in a corresponding time unit in a transmission manner 1 and a transmission manner 2;
FIG. 9 is a block diagram of a communication apparatus 900 according to an embodiment of this application; and
FIG. 10 is a block diagram of a communication apparatus 1000 according to an embodiment of this application.

### DESCRIPTION OF EMBODIMENTS

The following describes technical solutions of embodiments in this application with reference to accompanying drawings.

Before embodiments of this application are described, the following several descriptions are first provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms, similar operations, or steps in embodiments may be mutually referenced or explained in embodiments. This is not limited in this application.

Second, in this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists. A and B may be singular or plural. In text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one (piece) of a, b, and/or c may indicate a, b, c, "a and b", "a and c", "b and c", or "a, b, and c". Each of a, b, and c may be singular or plural.

Third, in this application, "first", "second", and various numeric numbers are merely used for distinguishing for ease of description, and are not used to limit the scope of embodiments of this application, for example, are used to distinguish between different messages but not to describe a specific order or sequence. It should be understood that objects described in this way are interchangeable in an appropriate circumstance, so that a solution other than embodiments of this application can be described.

Fourth, in this application, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Fifth, in this application, "indicate" may include a direct indication and an indirect indication. When a piece of indication information is described as indicating A, the indication information may directly indicate A or indirectly indicate A, but it does not indicate that the indication information definitely carries A.

Sixth, in this application, "sending information to XX (a device)" may be understood as that a destination end of the information is the device, and may include directly or indirectly sending the information to the device. "Receiving information from XX (a device) or receiving information that is from XX (a device)" may be understood as that a source end of the information is the device, and may include directly or indirectly receiving the information from the device. Information may undergo necessary processing, for example, a format change, between the source end for sending the information and the destination end. However, the destination end may understand valid information from the source end.

Seventh, arrows or blocks shown by dashed lines in the diagrams of the accompanying drawings in the specification of this application indicate optional steps or optional modules.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR) and a future communication system, vehicle-to-X (vehicle-to-X V2X), where V2X may include vehicle-to-network (vehicle-to-network, V2N), vehicle to vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), machine to machine (machine to machine, M2M), and the like.

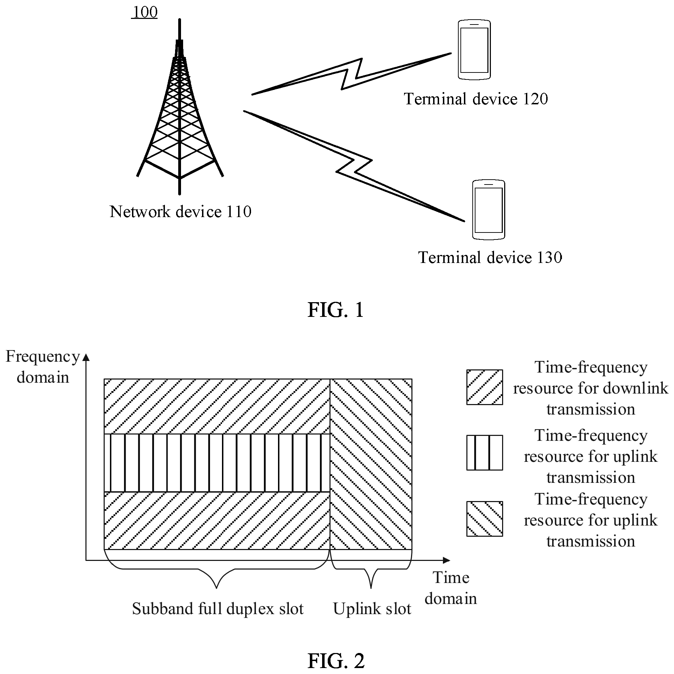

FIG. 1 is a diagram of a communication system 100 according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link to exchange information. It may be understood that the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RAT), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central units, CU), one or more distributed units (distributed units, DU), or one or more radio units (radio units, RU). For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network functional entities. These network functional entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at an RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, the apparatus configured to implement a function of the network device may be the network device, or may be an apparatus that can support the network device in implementing the function, for example, a chip system or a combination device or component that can implement a function of the access network device. The apparatus may be installed in the network device. In this embodiment of this application, the chip system may include a chip, or may include a chip and another discrete component.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine type communication, M2M/MTC), internet of things, virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combination device or component that can implement the function of the terminal device. The apparatus may be installed in the terminal device.

To facilitate understanding of embodiments of this application, concepts and related procedures in this application are described first.
1. Symbol (symbol): It is an abbreviation of a time domain symbol, and may also be referred to as an OFDM symbol. It should be noted that the time domain symbol may also be named in combination with other multiple access modes. This is not limited in embodiments of this application. For different subcarrier spacings, time domain symbol lengths may be different.
   It should be understood that three types of symbols may be included in a slot (slot): a downlink symbol, an uplink symbol, and a flexible symbol. The uplink symbol can be used for only uplink transmission. The downlink symbol can be used for only downlink transmission. The flexible symbol has no determined transmission direction, and may be used for uplink transmission or downlink transmission based on an indication of control signaling. Symbols in one slot may be all downlink symbols, all uplink symbols, all flexible symbols, or a combination of several types of symbols.
2. Time unit: The time unit may be a slot, a symbol, a subframe, a half-frame, a frame, a mini-subframe, a mini-slot, a transmission occasion (transmission occasion, TO), or a nominal repetition. This is not limited in this application.
   It may be understood that, for a PUSCH repetition type A, a TBoMS PUSCH, or a TBoMS PUSCH repetition, one transmission occasion is defined as L consecutive symbols starting from a start symbol S in one of one or more slots allocated to the PUSCH repetition type A, the TBoMS PUSCH, or the TBoMS PUSCH repetition. The start symbol S, a symbol length L, and a first slot and a slot quantity of the one or more allocated slots are configured by a network device. Alternatively, it may be understood that one transmission occasion is defined as all symbols allocated for PUSCH transmission in one slot. For a PUSCH repetition type B, the transmission occasion is defined as one nominal repetition. The PUSCH repetition type A and the PUSCH repetition type B are described below, and are not described herein.
3. SBFD: In an SBFD solution, one carrier is divided into a plurality of overlapping or non-overlapping subbands, and transmission directions of different subbands may be different. In other words, one carrier includes a first subband and a second subband that do not overlap, and transmission directions of the first subband and the second subband are different. It should be noted that the first subband and the second subband are two types of subbands with different transmission directions, and do not mean that one carrier includes only two subbands. For example, one carrier includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different.
   In this application, the SBFD includes subband overlapping full duplex (subband overlapping full duplex) and subband non-overlapping full duplex (subband non-overlapping full duplex).
4. Subband: The subband is a part of a frequency band in one carrier, that is, one or more consecutive physical resource blocks (physical resource blocks, PRB) in frequency domain. In this application, the subband may also be understood as a frequency domain resource. It may be understood that one SBFD subband includes one resource block (resource block, RB) or a group of consecutive RBs in a same transmission direction.
5. SBFD time unit: Frequency resources in an SBFD time unit include an uplink frequency resource and a downlink frequency resource, where the uplink frequency resource is used for uplink transmission, and the downlink frequency resource is used for downlink transmission. It may be understood that the SBFD time unit includes subbands used for uplink transmission and downlink transmission, and a gNB may perform an SBFD operation by using the subband in the SBFD time unit.
   FIG. 2 is a diagram of time-frequency division in a typical SBFD solution. A horizontal axis represents time domain, and a vertical axis represents frequency domain. In FIG. 2, two rectangular blocks filled with forward slashes separately represent a set of time-frequency resources used for downlink transmission, and a rectangular block filled with vertical lines represents a set of time-frequency resources used for uplink transmission. Time domain resources occupied by the three time-frequency resource blocks within a time domain range are referred to as an SBFD time unit.
6. Non-SBFD time unit: A frequency resource corresponding to each of all symbols included in a non-SBFD time unit is used only for downlink transmission or used only for uplink transmission. For example, all the symbols in the non-SBFD time unit are downlink symbols; all the symbols in the non-SBFD time unit are uplink symbols; all the symbols in the non-SBFD time unit are flexible symbols; in the non-full duplex time unit, some symbols are downlink symbols, and some symbols are uplink symbols; in the non-full duplex time unit, some symbols are downlink symbols, some symbols are uplink symbols, and some symbols are flexible symbols; in the non-full duplex time unit, some symbols are downlink symbols, and some symbols are flexible symbols; or in the non-full duplex time unit, some symbols are uplink symbols, and some symbols are flexible symbols. For example, a rectangular block filled with backslashes in FIG. 2 represents a set of time-frequency resources used for uplink transmission, and a slot occupied by the rectangular block within a time domain range is referred to as an uplink time unit. Transmission directions of all frequency resources in the time unit are uplink, and the time unit may be referred to as a non-SBFD slot.
7. Time unit type: includes an SBFD time unit or a non-SBFD time unit. The non-SBFD time unit includes an uplink time unit, a downlink time unit, and an SBFD time unit. A frequency resource corresponding to the uplink time unit is used only for uplink transmission, a frequency resource corresponding to the downlink time unit is used only for downlink transmission, and frequency resources corresponding to the SBFD time unit include an uplink frequency resource and a downlink frequency resource. The uplink frequency resource is used for uplink transmission, and the downlink frequency resource is used for downlink transmission.
   It should be understood that, in this embodiment of this application, because a PUSCH cannot be sent in a downlink symbol, unless otherwise specified, the non-SBFD time unit in this embodiment of this application includes only an uplink time unit and a flexible time unit.
8. Multi-slot (Multi-slot) PUSCH: includes a PUSCH repetition type A (PUSCH repetition type A), a PUSCH repetition type B (PUSCH repetition type B), and a transport block processing over multiple slots PUSCH (transport block processing over multiple slots, TBoMS PUSCH). The following briefly describes the PUSCH repetition type A and the PUSCH repetition type B.

For the PUSCH repetition type A, first, a network device indicates a quantity K of PUSCH repetitions and a start slot. A terminal device traverses, starting from the start slot based on a slot counting method that can be used, slots following the start slot. If a traversed slot meets an inclusion condition of the currently used slot counting method, the traversed slot is included in a slot count of the PUSCH repetition type A until a quantity of included slots reaches K. Then, the terminal device may send an uplink signal in a slot that is in the determined K slots and that can be actually used to transmit the uplink signal. For example, the slot counting method that can be used by the terminal device includes an available slot (available slot) counting method and a physical slot (physical slot) counting method.

For the PUSCH repetition type B, first, the network device may indicate time domain resources of a plurality of nominal repetitions (nominal repetitions) in the PUSCH repetition type B to the terminal device, and the time domain resources of the plurality of nominal repetitions are consecutive in time domain and have an equal length. Specifically, the network device may indicate, to the terminal device, a quantity K of nominal (nominal) PUSCH repetitions, a start symbol S of a time domain resource of a first nominal repetition, and a quantity L of symbols included in one nominal repetition. The quantity L of symbols included in a time domain resource of each nominal repetition is the same, where 0 ≤ S ≤ 13, and 1 ≤ L ≤ 14, so that S+L > 14. Starting from a second nominal repetition, a start symbol of a time domain resource of a nominal repetition is a symbol next to an end symbol of a time domain resource of a previous nominal repetition. The terminal device determines an invalid symbol (invalid symbol) in a time domain resource of each nominal repetition, and a remaining symbol may be considered as a potential valid symbol. Then, if a quantity of consecutive potential valid symbols (consecutive herein means a longest consecutive potential valid symbol) in one slot of one nominal repetition is greater than 0, one actual repetition may be mapped, and a time domain resource of one nominal repetition may include time domain resources of one or more actual repetitions. The terminal device does not send a PUSCH repetition on an actual repetition of a single symbol, unless a duration L of a nominal repetition indicated by a base station is a single symbol.

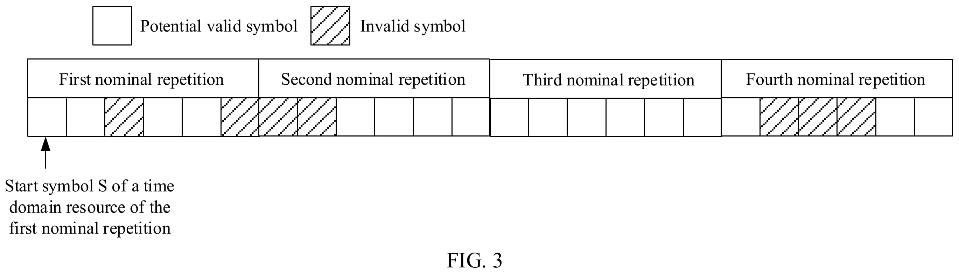

FIG. 3 is a diagram of transmission of a PUSCH repetition type B. As shown in FIG. 3, a start symbol S of a time domain resource of a first nominal repetition is shown in the figure, K=4, and L=6 symbols. In other words, a network device indicates four nominal repetitions to a terminal device, and each nominal repetition includes six symbols. It is assumed that an invalid symbol in a time domain resource of each determined nominal repetition is shown in FIG. 3, a symbol other than the invalid symbol is a potential valid symbol, and all potential valid symbols herein are uplink symbols. In this case, as shown in FIG. 3, the start symbol S of the time domain resource of the first nominal repetition is a first symbol from left to right in the figure. Therefore, the start symbol of the first nominal repetition is the first symbol in the figure, an end symbol is a sixth symbol in the figure, a start symbol of a second nominal repetition is a symbol next to the end symbol of the first nominal repetition (namely, a seventh symbol), and an end symbol is a twelfth symbol in the figure. Start symbols and end symbols of a third nominal repetition and a fourth nominal repetition can be deduced by analogy, and details are not described herein again.

9. SBFD dedicated uplink and downlink slot configuration
Based on different configurations of an uplink subband and a downlink subband in a slot, for example, the SBFD dedicated uplink and downlink slot configuration may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and each symbol in the SBFD time unit may be configured with at least one uplink subband and at least one downlink subband.

It should be understood that quantities of X in XXXXX, XXXXU, and DXXXU are merely examples for description, and the quantities of X may be configured by a network device based on an actual situation. In addition, XXXXX, XXXXU, and DXXXU may be configured through cell-level uplink and downlink slot configuration signaling and UE-level uplink and downlink slot configuration signaling.

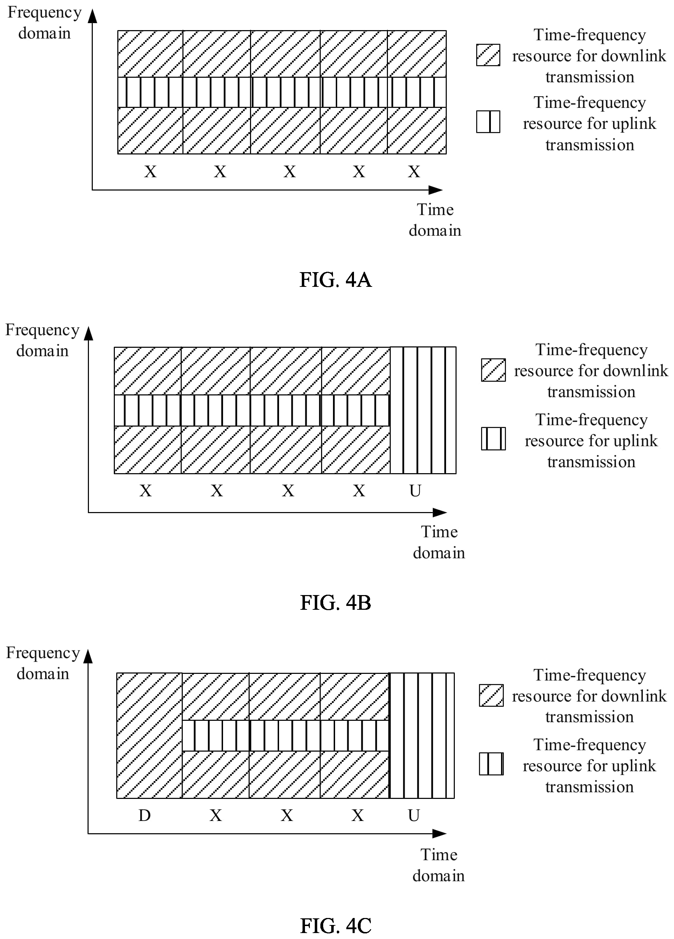

FIG. 4A to FIG. 4C are diagrams of an SBFD dedicated uplink and downlink slot configuration. For example, FIG. 4A is a possible example of XXXXX, FIG. 4B is a possible example of XXXXU, and FIG. 4C is a possible example of DXXXU. In this configuration method, uplink and downlink subbands configured on flexible symbols are invisible to UE. In other words, the UE does not know frequency resource positions of the uplink and downlink subbands. In this case, if the UE determines to perform downlink transmission on a flexible symbol, a gNB should ensure that the UE is indicated to perform downlink reception only in a downlink subband configured for the flexible symbol. If the UE determines to perform uplink transmission on the flexible symbol, the gNB should ensure that the UE is indicated to perform uplink transmission only in an uplink subband configured for the flexible symbol.

Currently, in a scenario of multiple transmission and reception points (multiple transmission and reception points, mTRPs), a protocol allows different spatial domain parameters to be used for different repetitions when the UE sends the PUSCH repetition type A. Similarly, the protocol allows different spatial domain parameters to be used for different nominal repetitions when the UE sends the PUSCH repetition type B. For ease of description, the following uses the PUSCH repetition type A as an example for specific description. It should be noted that, in the following step 1 to step 5, when a terminal device sends the PUSCH repetition type A, SBFD is not involved.

Step 1: A network device configures two sounding reference signal (sounding reference signal, SRS) resource sets (SRS resource sets) for a terminal device by using higher layer signaling (for example, RRC), where each SRS resource set includes at least one SRS resource (SRS resource), and the two SRS resource sets include a same quantity of SRS resources.

For example, the two SRS resource sets include a first SRS resource set and a second SRS resource set.

Step 2: The network device schedules, based on downlink control information (downlink control information, DCI), the terminal device to send the PUSCH repetition type A. The DCI includes the following parameters.
(1) One SRS resource set indication information (SRS resource set indicator), where the indicator indicates a relationship between K repetitions of the PUSCH repetition type A and the two SRS resource sets, K is a quantity of PUSCH repetitions, and each repetition is corresponding to one slot, that is, the K repetitions are corresponding to K slots. For example, the indicator occupies 2 bits (bits). For the PUSCH repetition type A, a quantity of transmission layers is limited to one. The following uses an example to describe specific meanings of different values of the 2 bits.

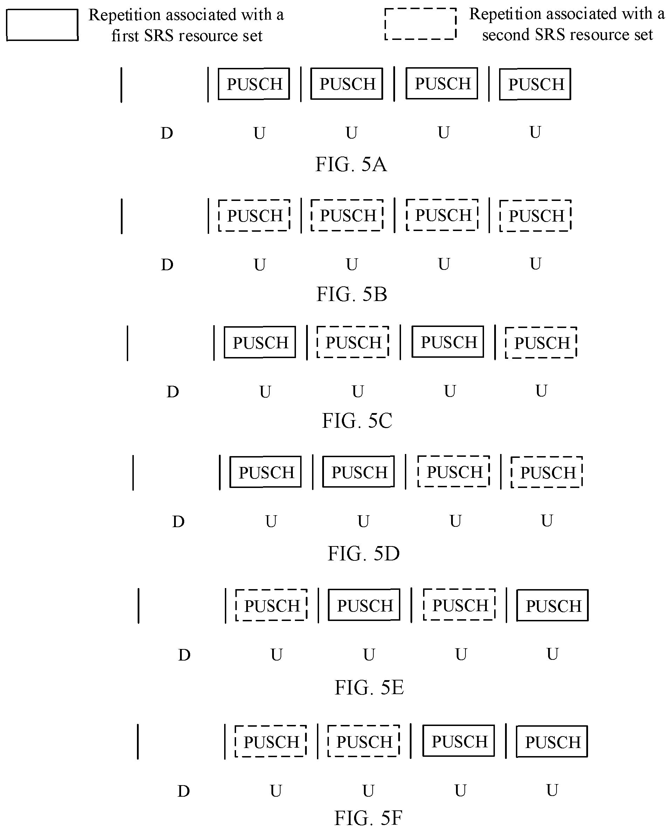

If the 2 bits are "00", the first SRS resource set is associated with the K slots, as shown in FIG. 5A. For example, K=4 is used as an example in FIG. 5A to FIG. 5F.

If the 2 bits are "01", the second SRS resource set is associated with the K slots, as shown in FIG. 5B.

It should be noted that a method for distinguishing the first SRS resource set from the second SRS resource set is not limited in this application. For example, IDs of the two SRS resource sets are different. A resource set with a smaller ID is the first SRS resource set, and the other resource set is the second SRS resource set, and vice versa.

If the 2 bits are "10", an association relationship between the first SRS resource set and the second SRS resource set and the K slots is determined according to the following method.
(a) When K=2, the first SRS resource set is associated with a first slot of the K slots, and the second SRS resource set is associated with a second slot of the K slots.
(b) When K>2, and a cyclic mapping manner is configured by using higher layer signaling (for example, cyclicMapping is enabled in a PUSCH configuration of RRC), the first SRS resource set is associated with the first slot in the K slots and the second SRS resource set is associated with the second slot in the K slots. The first SRS resource set and the second SRS resource set are associated with a remaining slot in the K slots based on the same SRS resource set mapping pattern (SRS resource set mapping pattern), as shown in FIG. 5C.
(c) When K > 2, and a sequential mapping manner is configured by using higher layer signaling (for example, sequentialMapping is enabled in the PUSCH configuration of RRC), the first SRS resource set is associated with the first slot and the second slot in the K slots, the second SRS resource set is associated with a third slot and a fourth slot in the K slots, and the same SRS resource set mapping pattern continues to be applied to a remaining slot in the K slots, as shown in FIG. 5D.

If the 2 bits are "11", in (a), (b), and (c) whose 2 bits are "10", the first SRS resource set is replaced with the second SRS resource set, and the second SRS resource set is replaced with the first SRS resource set. Details are not described herein again. Meanings corresponding to FIG. 5E and FIG. 5F are not described herein again.

(2) If uplink transmission is codebook (codebook)-based uplink transmission, the DCI further includes two SRS resource indication information (SRS resource indicator, SRI) and two precoding and layer quantity information (precoding information and number of layers).

The two SRIs include a first SRI and a second SRI, and the two precoding and layer quantity information include first precoding and layer quantity information and second precoding and layer quantity information. The first SRI and the first precoding and layer quantity information are related to the first SRS resource set, and the second SRI and the second precoding and layer quantity information are related to the second SRS resource set.

Specifically, the first SRI indicates a first SRS resource in the first SRS resource set, a repetition associated with the first SRS resource set uses a beam associated with the first SRS resource, and the first precoding and layer quantity information indicates a layer quantity and a precoding that are used by the repetition associated with the first SRS resource set. Similarly, the second SRI indicates a second SRS resource in the second SRS resource set, a repetition associated with the second SRS resource set uses a beam associated with the second SRS resource, and the second precoding and layer quantity information indicates a layer quantity and a precoding that are used by the repetition associated with the second SRS resource set.

Currently, the protocol specifies that a layer quantity indicated by the first precoding and layer quantity information is the same as a layer quantity indicated by the second precoding and layer quantity information.

(3) If uplink transmission is non-codebook (non-codebook)-based uplink transmission, the DCI further includes two SRIs.

The two SRIs include a first SRI and a second SRI. The first SRI is related to the first SRS resource set, and the second SRI is related to the second SRS resource set. It should be noted that the first SRI and the second SRI in (2) and (3) have different meanings.

Specifically, the first SRI indicates a first SRS resource subset, and a slot associated with the first SRS resource set uses a beam, a layer quantity, and a precoding that are associated with the first SRS resource subset. The first SRS resource subset includes at least one SRS resource in the first SRS resource set. For non-codebook-based uplink transmission, a quantity of SRS resources included in the first SRS resource subset implicitly indicates the layer quantity, and a spatial domain filter associated with the first SRS resource subset includes both the beam and the precoding information that are used by a repetition associated with the first SRS resource set.

Similarly, the second SRI indicates a second SRS resource subset of the second SRS resource set, and a slot associated with the second SRS resource set uses a beam, a layer quantity, and a precoding that are associated with the second SRS resource subset. The second SRS resource subset includes at least one SRS resource in the second SRS resource set. For non-codebook-based uplink transmission, a quantity of SRS resources included in the second SRS resource subset implicitly indicates the layer quantity, and a spatial domain filter associated with the second SRS resource includes both the beam and the precoding information that are used by a slot associated with the second SRS resource set.

Currently, the protocol specifies that the layer quantity indicated by the first SRI is the same as the layer quantity indicated by the second SRI. In other words, the first SRS resource subset and the second SRS resource subset include the same quantity of SRS resources.

Step 3: The terminal device determines an association relationship between the two SRS resource sets and the K slots based on the SRS resource set indication information in the DCI described in step 2. For specific descriptions, refer to descriptions of the SRS resource set indication information in the parameter (1) in step 2. Details are not described herein again.

Step 4: The terminal device determines a beam and a precoding that are used for sending the PUSCH repetition type A.

If uplink transmission is codebook-based uplink transmission, the terminal device may determine, based on the descriptions in the parameter (2) included in the DCI in step 1, a beam and a precoding that are used for sending PUSCH repetitions in the K slots.

If uplink transmission is non-codebook-based uplink transmission, the terminal device may determine, based on the descriptions in the parameter (3) included in the DCI in step 1, a beam and a precoding that are used for sending PUSCHs in the K slots. Details are not described herein again.

Step 5: The terminal device sends K repetitions of the PUSCH repetition type A in the K slots based on a corresponding beam and a corresponding precoding. Correspondingly, the network device receives the PUSCH repetition type A from the terminal device.

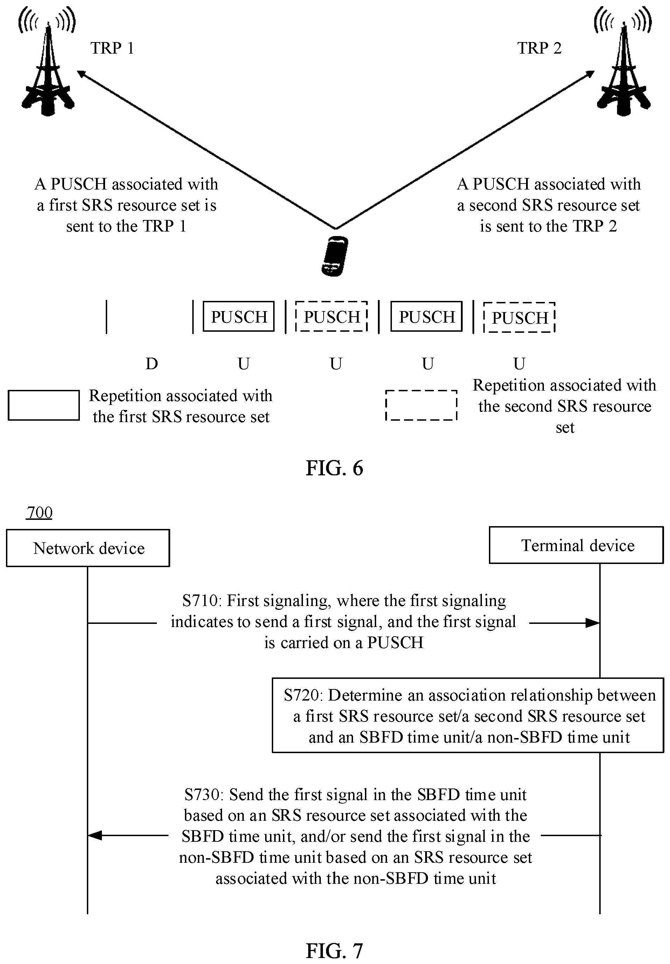

For example, as shown in FIG. 6, in an mTRP scenario, the network device may include a TRP 1 and a TRP 2. The TRP 1 may receive a PUSCH repetition in a slot associated with the first SRS resource set, and the TRP 2 may receive a PUSCH repetition in a slot associated with the second SRS resource set.

It may be understood that, if the PUSCH repetition type A in the foregoing step is replaced with the PUSCH repetition type B, a quantity of transmission layers is also limited to one, and only "slot" in the foregoing descriptions needs to be changed to "nominal repetition (nominal repetition)". Details are not described herein again.

Currently, channel environments and interference environments corresponding to an SBFD time unit and an uplink time unit (or a flexible time unit) are different due to a plurality of reasons. The following uses the SBFD time unit and the uplink time unit as an example for description. These reasons may include the following.
(1) Receive antennas of the network device in the SBFD time unit and the uplink time unit are different. As a result, an uplink channel in the SBFD time unit is different from an uplink channel in the uplink time unit.

For example, a quantity of receive antenna ports in the SBFD time unit is half of a quantity of receive antenna ports in the uplink time unit, because the other half of antenna ports need to be used for downlink sending.

For example, a receive antenna panel in the SBFD time unit is different from a receive antenna panel in the uplink time unit.

(2) Compared with the uplink time unit, in the SBFD time unit, the network device may further send a downlink signal when receiving an uplink signal. Therefore, the network device suffers severe self-interference (self-interference, SI) and cross link interference (cross link interference, CLI) in the SBFD time unit. As a result, an interference environment in the SBFD time unit is different from an interference environment in the uplink time unit.

Therefore, optimal spatial domain parameters used for sending the uplink signal in the SBFD time unit and the uplink time unit are different. The spatial domain parameter includes: a beam (beam), a precoding (precoder), and a layer (layer) quantity. In other words, in an SBFD duplex mode, the terminal device needs to have a capability of sending the uplink signal in the SBFD time unit and the uplink time unit by using different spatial domain parameters. In particular, when a multi-slot PUSCH is sent, one transport block (transport block, TB) is sent in a plurality of time units.

It can be learned from FIG. 3 that the SBFD slots and the non-SBFD slots may be flexibly configured, for example, configured as XXXXU and DXXXU. If associating is performed based on four SRS resource set mapping patterns corresponding to FIG. 5C, FIG. 5D, FIG. 5E, and FIG. 5F, the four SRS resource set mapping patterns cannot ensure that the SBFD slot and the non-SBFD slot are respectively associated with different SRS resource sets, that is, it cannot be ensured that the PUSCH repetitions are sent in the SBFD slot and the non-SBFD slot by using different spatial domain parameters.

In view of this, this application provides an uplink transmission method to effectively resolve the foregoing technical problem. The following describes in detail the method provided in this application. Processing described below as being performed by a single execution body may alternatively be performed by a plurality of execution bodies. These execution bodies may be logically and/or physically separated. For example, processing performed by the network device may be performed by at least one of a CU, a DU, and an RU.

FIG. 7 is a schematic flowchart of an uplink transmission method 700 according to this application. The method includes the following steps.

S710: A network device sends first signaling to a terminal device, where the first signaling indicates to send a first signal, and the first signal is carried on a PUSCH. Correspondingly, the terminal device receives the first signaling from the network device.

For example, the first signaling is downlink control information (downlink control information, DCI).

For example, the first signal is carried on a PUSCH repetition type A, a PUSCH repetition type B, a TBoMS PUSCH, or a TBoMS PUSCH repetition.

S720: The terminal device determines that an association relationship between a first SRS resource set/a second SRS resource set and an SBFD time unit/a non-SBFD time unit is a first association relationship or a second association relationship, where the first SRS resource set and the second SRS resource set are two SRS resource sets configured by the network device for the terminal device.

The first association relationship is that the first SRS resource set is associated with the SBFD time unit, and the second SRS resource set is associated with the non-SBFD time unit; and the second association relationship is that the first SRS resource set is associated with the non-SBFD time unit, and the second SRS resource set is associated with the SBFD time unit.

It should be noted that for the PUSCH repetition type A, the TBoMS PUSCH, or the TBoMS PUSCH repetition, the time unit in this application may be understood as a slot (or a transmission occasion, or a repetition); and for the PUSCH repetition type B, the time unit in this application may be understood as a nominal repetition (or a transmission occasion).

Optionally, the non-SBFD time unit includes an uplink time unit and a flexible time unit. It may be understood that the solution in this embodiment of this application is applicable to uplink transmission, and uplink transmission cannot be performed in a downlink time unit. Therefore, the non-SBFD time unit does not include a downlink time unit.

Optionally, the method further includes: The network device sends second signaling to the terminal device, where the second signaling includes information #1, the information #1 is used to configure the first SRS resource set and the second SRS resource set for the terminal device, and each SRS resource set includes at least one SRS resource. Correspondingly, the terminal device receives the second signaling from the network device.

For example, the second signaling is RRC signaling.

Optionally, a quantity of SRS resources included in a first SRS resource subset is equal to a quantity of SRS resources included in a second SRS resource subset.

It should be noted that a method for distinguishing the first SRS resource set from the second SRS resource set is not limited in this application. For example, IDs of the two SRS resource sets are different. A resource set with a smaller ID is the first SRS resource set, and the other resource set is the second SRS resource set.

The following provides several specific implementations in which the terminal device determines that the association relationship between the first SRS resource set/the second SRS resource set and the SBFD time unit/the non-SBFD time unit is the first association relationship or the second association relationship.

Implementation 1: A protocol predefines the association relationship between the first SRS resource set/the second SRS resource set and the SBFD time unit/the non-SBFD time unit.

For example, the protocol predefines that the first SRS resource set is associated with the SBFD time unit and the second SRS resource set is associated with the non-SBFD time unit. In this case, the terminal device determines that the association relationship between the first SRS resource set/the second SRS resource set and the SBFD time unit/the non-SBFD time unit is the first association relationship.

For example, the protocol predefines that the first SRS resource set is associated with the non-SBFD time unit and the second SRS resource set is associated with the SBFD time unit. In this case, the terminal device determines that the association relationship between the first SRS resource set/the second SRS resource set and the SBFD time unit/the non-SBFD time unit is the second association relationship.

Implementation 2: The terminal device determines the association relationship between the first SRS resource set/the second SRS resource set and the SBFD time unit/the non-SBFD time unit based on an indication of the network device.

Optionally, based on this implementation, the method further includes: The network device sends first information to the terminal device, where the first information indicates the first association relationship or the second association relationship. Correspondingly, the terminal device receives the first information, and determines, based on the first information, the association relationship between the first SRS resource set/the second SRS resource set and the SBFD time unit/the non-SBFD time unit. Specifically, if the first information indicates the first association relationship, it is determined that the association relationship is the first association relationship. Similarly, if the first information indicates the second association relationship, it is determined that the association relationship is the second association relationship.

Optionally, when the first information is a first value, the first association relationship is indicated, and when the second information is a second value, the second association relationship is indicated, where the first value is different from the second value. For example, the first information is 1-bit information, the first value may be "0", and the second value may be "1", and vice versa. Details are not described herein again.

Optionally, the first information is carried in the first signaling, and the first signaling is the DCI. For example, the first information may be carried in an SRS resource set indication information field of the first signaling. It may be understood that, because the SRS resource set mapping patterns corresponding to FIG. 5A to FIG. 5F are indicated based on the SRS resource set indication information field in the DCI, and after the SBFD time unit is introduced, the SRS resource set mapping patterns corresponding to FIG. 5A to FIG. 5F do not need to be indicated by the indicator, the 1 bit in the SRS resource set indication information field may be redefined/reinterpreted to indicate the first information.

Optionally, the first information is carried in second signaling, and the second signaling is RRC signaling.

Implementation 3: The terminal device determines, based on a field in the first SRS resource set and/or a field in the second SRS resource set, the association relationship between the first SRS resource set/the second SRS resource set and the SBFD time unit/the non-SBFD time unit. In this implementation, both the two SRS resource sets may include a field used to determine the association relationship, or only one of the two SRS resource sets may include a field used to determine the association relationship. The following provides an example for description.

Example 1: The first SRS resource set includes a first field, the second SRS resource includes a second field, the first field indicates that the first SRS resource set is associated with the SBFD time unit or the non-SBFD time unit, the second field indicates that the second SRS resource set is associated with the SBFD time unit or the non-SBFD time unit, and the time units associated with the first SRS resource set and the second SRS resource set are of different types.

For example, when a value of the first field is a first value, it indicates that the first SRS resource set is associated with the SBFD time unit, and when the value of the first field is a second value, it indicates that the first SRS resource set is associated with the non-SBFD time unit. Similarly, when a value of the second field is the first value, it indicates that the second SRS resource set is associated with the SBFD time unit, and when the value of the second field is the second value, it indicates that the second SRS resource set is associated with the non-SBFD time unit. For example, if the first field is a 1-bit field, the first value may be "0", and the second value may be "1", or the first value is "1", and the second value is "0".

It may be understood that, because the time units associated with the first SRS resource set and the second SRS resource set are of different types, the values of the first field of the first SRS resource set and the second field of the second SRS resource set need to be different, or the values of the first field of the first SRS resource set and the second field of the second SRS resource set are not expected to be the same. For example, if the value of the first field is the first value, and the value of the second field is the second value, the terminal device determines, based on the first value, that the first SRS resource set is associated with the SBFD time unit, and determines, based on the second value, that the second SRS resource set is associated with the non-SBFD time unit, to determine that the association relationship is the first association relationship. For another example, if the value of the first field is the second value, and the value of the second field is the first value, the terminal device determines that the association relationship is the second association relationship. A specific determining process is not described herein again.

Example 2: The first SRS resource set includes the first field or the second SRS resource includes the second field. For descriptions of the first field and the second field, refer to the descriptions in Example 1. The time units associated with the first SRS resource set and the second SRS resource set are of different types.

For example, if the first SRS resource set includes the first field, indicating that the first SRS resource set is associated with the SBFD time unit, and the second SRS resource set does not include the second field, indicating that the second SRS resource set is associated with the non-SBFD time unit, the terminal device determines that the association relationship is the first association relationship. Similarly, if the first SRS resource set does not include the first field, indicating that the first SRS resource set is associated with the non-SBFD time unit, and the second SRS resource set includes the second field, indicating that the second SRS resource set is associated with the SBFD time unit, the terminal device determines that the association relationship is the second association relationship.

For example, if the first SRS resource set includes the first field, indicating that the first SRS resource set is associated with the non-SBFD time unit, and the second SRS resource set does not include the second field, indicating that the second SRS resource set is associated with the SBFD time unit, the terminal device determines that the association relationship is the second association relationship. Similarly, if the first SRS resource set does not include the first field, indicating that the first SRS resource set is associated with the SBFD time unit, and the second SRS resource set includes the second field, indicating that the second SRS resource set is associated with the non-SBFD time unit, the terminal device determines that the association relationship is the first association relationship.

It should be understood that the values of the first field and the second field are not limited in the foregoing example.

It may be understood that, it is not expected that both the first field in the first SRS resource set and the second field in the second SRS resource set exist, and it is also not expected that neither the first field in the first SRS resource set nor the second field in the second SRS resource set exists.

Implementation 4: One of the first SRS resource set and the second SRS resource set is defined as an SRS resource set dedicated for SBFD and is associated only with the SBFD time unit, and the other SRS resource set is an SRS resource set dedicated for non-SBFD and is associated only with the non-SBFD time unit.

It should be noted that the names of the SRS resource set dedicated for SBFD and the SRS resource set dedicated for non-SBFD in this implementation are merely examples, and are merely for ease of distinguishing and description. Other names of the two SRS resources are not excluded in this application.

For example, the two SRS resource sets may be distinguished based on different signaling names. Currently, a signaling name of an SRS resource set in higher layer signaling is SRS-ResourceSet. Therefore, a signaling name of the SRS resource set dedicated for SBFD needs to be different from SRS-ResourceSet. For example, the signaling name of the SRS resource set dedicated for SBFD may be SRS-ResourceSet-SBFD.

For example, if the information #1 configures the first SRS resource set as the SRS resource set dedicated for SBFD, and the second SRS resource set as the SRS resource set dedicated for non-SBFD, the terminal device may learn that the first SRS resource set is associated with the SBFD time unit, and the second SRS resource set is associated with the non-SBFD time unit, to determine that the association relationship is the first association relationship. For another example, if the information #1 configures the first SRS resource set as the SRS resource set dedicated for non-SBFD, and the second SRS resource set as the SRS resource set dedicated for SBFD, the terminal device may learn that the first SRS resource set is associated with the non-SBFD time unit, and the second SRS resource set is associated with the SBFD time unit, to determine that the association relationship is the second association relationship.

It may be understood that it is not expected that both the first SRS resource set and the second SRS resource set are SRS resource sets dedicated for non-SBFD, and it is also not expected that both the first SRS resource set and the second SRS resource set are SRS resource sets dedicated for SBFD.

It may be further understood that when the information #1 is carried in the second signaling, and the second signaling is the RRC signaling, the implementation 3 and the implementation 4 may be considered as being based on an RRC configuration.

S730: The terminal device sends the first signal in the SBFD time unit based on an SRS resource set associated with the SBFD time unit, and/or sends the first signal in the non-SBFD time unit based on an SRS resource set associated with the non-SBFD time unit. Correspondingly, the network device receives the first signal in the SBFD time unit, and/or receives the first signal in the non-SBFD time unit.

It may be understood that the terminal device sends the first signal in the SBFD time unit based on the SRS resource set associated with the SBFD time unit, and/or sends the first signal in the non-SBFD time unit based on the SRS resource set associated with the non-SBFD time unit. Alternatively, the description may be replaced with that the terminal device sends, based on the first SRS resource set, the first signal in a time unit associated with the first SRS resource set, and/or sends, based on the second SRS resource set, the first signal in a time unit associated with the second SRS resource set.

It can be learned from the foregoing descriptions that the first SRS resource set and the second SRS resource set may be used to determine a spatial domain parameter, including a beam, a precoding, a layer quantity, and the like, used by the terminal device to send an uplink signal (namely, the first signal). Therefore, sending the first signal based on a corresponding SRS resource set herein may also be understood as determining, based on the corresponding SRS resource set, a spatial domain parameter for sending the first signal, and then sending the first signal based on the determined spatial domain parameter.

The following describes how to determine, based on the SRS resource set, the spatial domain parameter used for sending the first signal when uplink transmission is codebook-based uplink transmission and when non-codebook-based uplink transmission, respectively.
(1) Uplink transmission is codebook-based uplink transmission.

Optionally, the first signaling includes a first SRI and a second SRI. The first SRI indicates a first SRS resource in the first SRS resource set, and the second SRI indicates a second SRS resource in the second SRS resource set.

Optionally, the first signaling includes first layer quantity information, first precoding information, second layer quantity information, and second precoding information. The first layer quantity information and the first precoding information are related to the first SRS resource set, and the second layer quantity information and the second precoding information are related to the second SRS resource set.

Optionally, a second layer quantity is equal to a first layer quantity. Therefore, only one of the first layer quantity information and the second layer quantity information needs to be indicated, and the terminal device may implicitly determine the other piece of layer quantity information based on the foregoing equality relationship.

Specifically, if the first SRS resource set is associated with the SBFD time unit, and the second SRS resource set is associated with the non-SBFD time unit (that is, the association relationship is the first association relationship), the terminal device sends the first signal in the SBFD time unit by using a beam associated with the first SRS resource, the first layer quantity information, and the first precoding information; and the terminal device sends the first signal in the non-SBFD time unit by using a beam associated with the second SRS resource, the second layer quantity, and the second precoding.

Similarly, if the first SRS resource set is associated with the non-SBFD time unit, and the second SRS resource set is associated with the SBFD time unit (that is, the association relationship is the second association relationship), the terminal device sends the first signal in the non-SBFD time unit by using the beam associated with the first SRS resource, the first layer quantity information, and the first precoding information; and the terminal device sends the first signal in the SBFD time unit by using the beam associated with the second SRS resource, the second layer quantity, and the second precoding.

(2) Uplink transmission is non-codebook-based uplink transmission.

Optionally, the first signaling includes a first SRI and a second SRI. The first SRI indicates a first SRS resource subset in the first SRS resource set, and the first SRS resource subset includes at least one SRS resource in the first SRS resource set. The second SRI indicates a second SRS resource subset in the second SRS resource set, and the second SRS resource subset includes at least one SRS resource in the second SRS resource set.

It may be understood that, for non-codebook-based uplink transmission, a quantity of SRS resources included in an SRS resource subset implicitly indicates a layer quantity.

Optionally, a quantity of SRS resources included in a first SRS resource subset is equal to a quantity of SRS resources included in a second SRS resource subset.

Specifically, if the first SRS resource set is associated with the SBFD time unit, and the second SRS resource set is associated with the non-SBFD time unit (that is, the association relationship is the first association relationship), the terminal device sends the first signal in the SBFD time unit by using a beam, a layer quantity, and a precoding that are associated with the first SRS resource subset; and the terminal device sends the first signal in the non-SBFD time unit by using a beam, a layer quantity, and a precoding that are associated with the second SRS resource subset.

Similarly, if the first SRS resource set is associated with the non-SBFD time unit, and the second SRS resource set is associated with the SBFD time unit (that is, the association relationship is the second association relationship), the terminal device sends the first signal in the non-SBFD time unit by using the beam, the layer quantity, and the precoding that are associated with the first SRS resource subset; and the terminal device sends the first signal in the SBFD time unit by using the beam, the layer quantity, and the precoding that are associated with the second SRS resource subset.

Optionally, the second signaling includes third information, the third information indicates a transmission manner in which the terminal device sends the first signal, and the transmission manner indicated by the third information is one of a transmission manner 1 to a transmission manner 3. The following describes the three transmission manners in detail.

(1) Transmission manner 1: The terminal device may send the first signal only in time units of a same type.

It may be understood that, if the third information indicates that the transmission manner in which the terminal device sends the first signal is the transmission manner 1, the terminal device sends the first signal only in the SBFD time unit, or the terminal device sends the first signal only in the non-SBFD time unit. For example, the terminal device determines, based on the transmission manner 1, to send the first signal in a first time unit set. All time units included in the first time unit set are SBFD time units, or all time units included in the first time unit set are uplink time units and/or flexible time units. Whether all time units in the first time unit set determined by the terminal device are SBFD time units or non-SBFD time units is described in detail by using an example in the following, and details are not described herein.

It may be further understood that the terminal device may send different uplink signals in different types of time units. This is not limited herein. For example, the network device further indicates the terminal device to send second signal, and the second signal is also carried on a PUSCH. In addition, the network device further indicates the terminal device to send the second signal in the transmission manner 1. In this case, for example, the terminal device may send the first signal in the SBFD time unit, and send the second signal in the non-SBFD time unit, and vice versa. This is not limited in this application.

It may be further understood that the first signal is carried on a first TB, and the second signal is carried on a second TB, where the first TB and the second TB are different TBs.

(2) Transmission manner 2: The terminal device may send the first signal in different types of time units.

It may be understood that, if the third information indicates that the transmission manner in which the terminal device sends the first signal is the transmission manner 2, the terminal device may send the first signal across (across) the SBFD time unit and the non-SBFD time unit (or across different types of time units). For example, the terminal device determines, based on the transmission manner 2, to send the first signal in the first time unit set. The first time unit set includes 10 time units: XXXUUXXXXU, where X is an SBFD time unit, and U is an uplink time unit. A third time unit and a fourth time unit are of different types. In this case, it may be considered that the terminal device sends the first signal across an SBFD time unit and a non-SBFD time unit. Similarly, a fifth time unit and a sixth time unit are of different types, and a ninth time unit and a tenth time unit are of different types. In this case, it may also be considered that the first signal is sent across an SBFD time unit and a non-SBFD time unit.

(3) Transmission manner 3: It is determined, based on the second information, to send the first signal in the transmission manner 1 or the transmission manner 2.

Optionally, the method further includes: The network device sends the second information to the terminal device, where the second information indicates to transmit the first signal in the transmission manner 1 or the transmission manner 2. Correspondingly, the terminal device receives the second information from the network device.

It may be understood that the network device may semi-statically configure the three transmission manners based on the third information, and in the transmission manner 3, the transmission manner 1 and the transmission manner 2 may be dynamically switched based on the second information.

For example, the second information is carried in SRS resource set indication information of the first signaling, and the first signaling is the DCI. It may be understood that in this implementation, a current SRS resource set indication information field may be re-interpreted to dynamically switch between the two transmission manners without increasing a length of the DCI. This improves signal transmission flexibility.

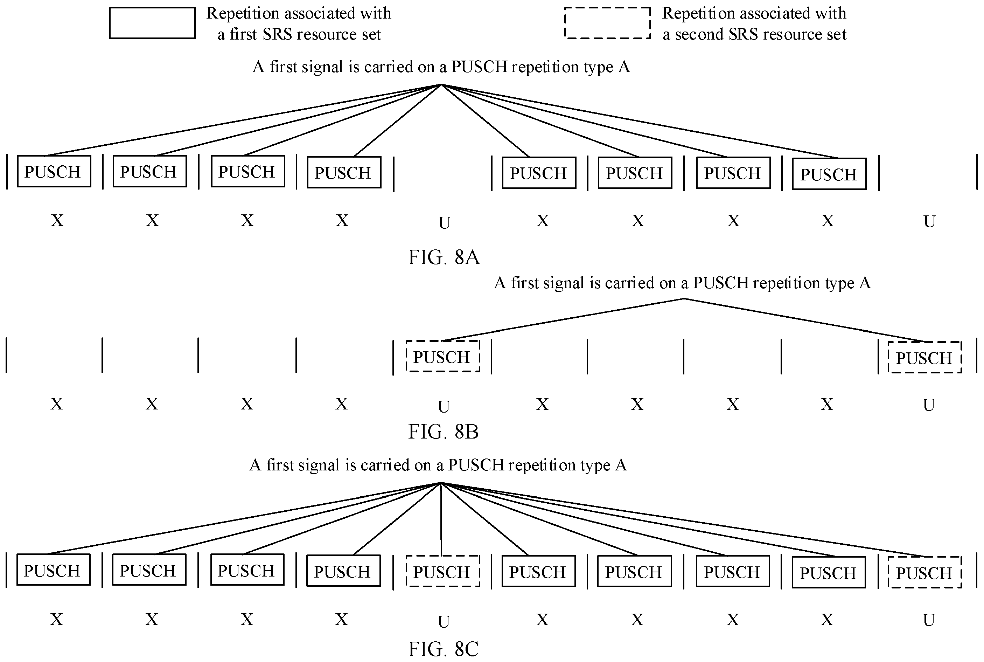

FIG. 8A to FIG. 8C are diagrams of transmitting a first signal in a corresponding time unit in a transmission manner 1 and a transmission manner 2. For example, in FIG. 8A to FIG. 8C, the first signal is carried on the PUSCH repetition type A, the first SRS resource set is associated with an SBFD time unit, and the second SRS resource set is associated with a non-SBFD time unit (namely, the first association relationship).

FIG. 8A and FIG. 8B are diagrams of transmitting the first signal in a corresponding time unit when the third information indicates the transmission manner 1, or when the third information indicates the transmission manner 3 and the second information indicates the transmission manner 1. For example, if the terminal device determines to transmit the first signal only in an SBFD time unit, as shown in FIG. 8A, the terminal device sends a PUSCH repetition of the first signal only in an SBFD time unit (namely, the time unit associated with the first SRS resource set). If the terminal device determines to transmit the first signal only in a non-SBFD time unit, as shown in FIG. 8B, the terminal device sends the first signal only in a non-SBFD time unit (namely, the time unit associated with the second SRS resource set). As shown in FIG. 8C, the third information indicates the transmission manner 2, or the third information indicates the transmission manner 3, and the second information indicates the transmission manner 2. The terminal device may send the first signal in an SBFD time unit and a non-SBFD time unit (namely, the time units associated with the two SRS resource sets).

Optionally, when the second information indicates the transmission manner 1, the second information may directly indicate the terminal device to send the first signal in an SBFD time unit or a non-SBFD time unit; or the foregoing may not be indicated, and the terminal device determines by itself a time unit type for sending the first signal. Examples are used below for description.

Example 1: The second information indicates only a transmission manner.

It may be understood that the network device only indicates to transmit the first signal in the transmission manner 1, and does not explicitly indicate whether to transmit the first signal in an SBFD time unit or in a non-SBFD time unit. Therefore, the terminal device further needs to determine whether to transmit the first signal in an SBFD time unit or in a non-SBFD time unit. The following provides several possible manners of determining whether to transmit the first signal in an SBFD time unit or in a non-SBFD time unit.

Manner 1: The terminal device determines, based on a type of a first time unit allocated to the first signal, a type of time unit in which the first signal is to be sent.

Specifically, if the first time unit is an SBFD time unit, the terminal device sends the first signal only in an SBFD time unit. If the first time unit is an uplink time unit or a flexible time unit, the terminal device sends the first signal only in an uplink time unit and a flexible time unit. If the first time unit is a downlink time unit, the terminal device determines, based on a type of a first non-downlink time unit after the first time unit, a type of time unit in which the first signal is to be sent. Details are not described herein again.

Manner 2: The terminal device determines, based on an SRS resource set associated with the first time unit allocated to the first signal, a type of time unit in which the first signal is to be sent.

Specifically, if the first time unit is associated with the first SRS resource set, the terminal device sends the first signal only in the time unit associated with the first SRS resource set; or if the first time unit is associated with the second SRS resource set, the terminal device sends the first signal only in the time unit associated with the second SRS resource set. If the first time unit is not associated with any SRS resource set, the terminal device determines a first time unit associated with an SRS resource set after the first time unit as a time unit #1. If the SRS resource set associated with the time unit #1 is the first SRS resource set, the terminal device determines to send the first signal only in the time unit associated with the first SRS resource set. Similarly, if the SRS resource set associated with the time unit #1 is the second SRS resource set, the terminal device determines to send the first signal only in the time unit associated with the second SRS resource set.

It may be understood that the foregoing manner 1 and manner 2 are equivalent descriptions and may be replaced with each other.

In an implementation, the first information described in S720 and the second information in the example may be jointly carried in 2 bits of the SRS resource set indication information field in the first signaling. The first signaling is the DCI. A meaning of the SRS resource set indication information field is reinterpreted. The first information occupies 1 bit, and indicates that the association relationship between the first SRS resource set/the second SRS resource set and the SBFD time unit/the non-SBFD time unit is the first association relationship or the second association relationship. The second information occupies 1 bit, and indicates that the transmission manner is the transmission manner 1 or the transmission manner 2. For example, when a value of the first information is "0", the first association relationship is indicated; and when the value of the second information is "1", the second association relationship is indicated, and vice versa. For example, when a value of the second information is "0", it indicates that the first signal is transmitted in the transmission manner 1; and when the value of the second information is "1", it indicates that the first signal is transmitted in the transmission manner 2.

In another implementation, the first information described in S720 and the second information in the example may be jointly carried in the 2 bits of the SRS resource set indication information field in the first signaling, and the first signaling is the DCI. A meaning of the SRS resource set indication information field is reinterpreted. Optionally, when the SRS resource set indication information is a first value, it indicates that the first SRS resource set is associated with the SBFD time unit and the second SRS resource set is associated with the non-SBFD time unit (namely, the first association relationship), and indicates the terminal device to send the first signal in the transmission manner 1. When the SRS resource set indication information is a second value, it indicates that the first SRS resource set is associated with the SBFD time unit and the second SRS resource set is associated with the non-SBFD time unit (namely, the first association relationship), and indicates the terminal device to send the first signal in the transmission manner 2. When the SRS resource set indication information is a third value, it indicates that the first SRS resource set is associated with the non-SBFD time unit and the second SRS resource set is associated with the SBFD time unit (namely, the second association relationship), and indicates the terminal device to send the first signal in the transmission manner 1. When the SRS resource set indication information is a fourth value, it indicates that the first SRS resource set is associated with the non-SBFD time unit and the second SRS resource set is associated with the SBFD time unit (namely, the second association relationship), and indicates the terminal device to send the first signal in the transmission manner 2. The first value, the second value, the third value, and the fourth value are different from each other. For example, the first value, the second value, the third value, and the fourth value may be one of "00", "01", "10", and "11".

Example 2: The second information indicates the transmission manner, and explicitly indicates whether to transmit the first signal in an SBFD time unit or in a non-SBFD time unit when the indicated transmission manner is the transmission manner 1.

Optionally, when the second information is a first value, it indicates the terminal device to transmit the first signal in the transmission manner 1 and send the first signal only in an SBFD time unit. When the second information is a second value, it indicates the terminal device to send the first signal in the transmission manner 1 and send the first signal only in a non-SBFD time unit. When the second information is a third value, it indicates the terminal device to send the first signal in the transmission manner 2, that is, the terminal device may send the first signal in different types of time units. The first value, the second value, and the third value are different from each other. For example, the first value, the second value, and the third value may be one of "00", "01", "10", and "11".

For example, the foregoing description may be replaced with the following: When the second information is a first value, it indicates the terminal device to transmit the first signal in the transmission manner 1 and send the first signal only in the time unit associated with the first SRS resource set. When the second information is a second value, it indicates the terminal device to send the first signal in the transmission manner 1 and send the first signal only in the time unit associated with the second SRS resource set. When the second information is a third value, it indicates the terminal device to send the first signal in the transmission manner 2, that is, send the first signal in the time units associated with the two SRS resource sets.

In an implementation, if the second information is 2-bit information, the second information may be indicated by the 2 bits of the SRS resource set indication information field of the first signaling, and the first signaling is the DCI.

In another implementation, the first information described in S720 and the second information in the example may be jointly carried in the 2 bits of the SRS resource set indication information field in the first signaling, and the first signaling is the DCI. A meaning of the SRS resource set indication information field is reinterpreted.

It may be understood that, because the second information indicates the transmission manner, and explicitly indicates whether the first signal is transmitted in the SBFD time unit or in the non-SBFD time unit when the indicated transmission manner is the transmission manner 1, there are six possible combinations in total for the two association relationships and the two transmission manners. However, the SRS resource set indication information has only 2 bits. Therefore, in an implementation, any four combinations may be selected from the six combinations according to an actual requirement. The six combinations are respectively as follows: a first combination: indicating that the first SRS resource set is associated with the SBFD time unit and the second SRS resource set is associated with the non-SBFD time unit (namely, the first association relationship), and indicating the terminal device to send the first signal in the transmission manner 1 and the terminal device to send the first signal only in the time unit associated with the first SRS resource (that is, send the first signal only in the SBFD time unit); a second combination: indicating that the first SRS resource set is associated with the SBFD time unit and the second SRS resource set is associated with the non-SBFD time unit (namely, the first association relationship), and indicating the terminal device to send the first signal in the transmission manner 1 and the terminal device to send the first signal only in the time unit associated with the second SRS resource (that is, send the first signal only in the non-SBFD time unit); a third combination: indicating that the first SRS resource set is associated with the non-SBFD time unit and the second SRS resource set is associated with the SBFD time unit (namely, the second association relationship), and indicating the terminal device to send the first signal in the transmission manner 1 and the terminal device to send the first signal only in the time unit associated with the first SRS resource (that is, send the first signal only in the non-SBFD time unit); a fourth combination: indicating that the first SRS resource set is associated with the non-SBFD time unit and the second SRS resource set is associated with the SBFD time unit (namely, the second association relationship), and indicating the terminal device to send the first signal in the transmission manner 1 and the terminal device to send the first signal only in the time unit associated with the second SRS resource (that is, send the first signal only in the SBFD time unit); a fifth combination: indicating that the first SRS resource set is associated with the SBFD time unit and the second SRS resource set is associated with the non-SBFD time unit (namely, the first association relationship), and indicating the terminal device to send the first signal in the transmission manner 2; and a sixth combination: indicating that the first SRS resource set is associated with the non-SBFD time unit and the second SRS resource set is associated with the SBFD time unit (namely, the second association relationship), and indicating the terminal device to send the first signal in the transmission manner 2.

For example, four combinations selected from the six combinations are a combination #1, a combination #2, a combination #3, and a combination #4. Optionally, when the SRS resource set indication information field is a first value, the combination #1 is indicated; when the SRS resource set indication information field is a second value, the combination #2 is indicated, when the SRS resource set indication information is a third value, the combination #3 is indicated, when the SRS resource set indication information field is a fourth value, the combination #4 is indicated, and the first value, the second value, the third value, and the fourth value are different from each other. For example, the first value, the second value, the third value, and the fourth value may be one of "00", "01", "10", and "11".

In still another implementation, the first information described in S720 and the second information in the example may be jointly carried in the first field of the first signaling, a length of the first field is 3 bits, and the first signaling is the DCI.

Optionally, when the first field is a first value, it indicates that the first SRS resource set is associated with the SBFD time unit and the second SRS resource set is associated with the non-SBFD time unit (namely, the first association relationship), and indicates the terminal device to send the first signal in the transmission manner 1 and the terminal device to send the first signal only in the time unit associated with the first SRS resource (that is, send the first signal only in the SBFD time unit). When the first field is a second value, it indicates that the first SRS resource set is associated with the SBFD time unit and the second SRS resource set is associated with the non-SBFD time unit (namely, the first association relationship), and indicates the terminal device to send the first signal in the transmission manner 1 and the terminal device to send the first signal only in the time unit associated with the second SRS resource (that is, send the first signal only in the non-SBFD time unit). When the first field is a third value, it indicates that the first SRS resource set is associated with the non-SBFD time unit and the second SRS resource set is associated with the SBFD time unit (namely, the second association relationship), and indicates the terminal device to send the first signal in the transmission manner 1 and the terminal device to send the first signal only in the time unit associated with the first SRS resource (that is, send the first signal only in the non-SBFD time unit). When the first field is a fourth value, it indicates that the first SRS resource set is associated with the non-SBFD time unit and the second SRS resource set is associated with the SBFD time unit (namely, the second association relationship), and indicates the terminal device to send the first signal in the transmission manner 1 and the terminal device to send the first signal only in the time unit associated with the second SRS resource (that is, send the first signal only in the SBFD time unit). When the first field is a fifth value, it indicates that the first SRS resource set is associated with the SBFD time unit and the second SRS resource set is associated with the non-SBFD time unit (namely, the first association relationship), and indicates the terminal device to send the first signal in the transmission manner 2. When the first field is a sixth value, it indicates that the first SRS resource set is associated with the non-SBFD time unit and the second SRS resource set is associated with the SBFD time unit (namely, the second association relationship), and indicates the terminal device to send the first signal in the transmission manner 2. The first value, the second value, the third value, the fourth value, the fifth value, and the sixth value are different from each other. For example, the first value, the second value, the third value, and the fourth value may be one of "000", "001", "010", "011", "100", and "101".

Optionally, in a possible solution, a meaning of the 2 bits in the SRS resource set indication information in the first signaling (DCI) may be redefined, and the 2 bits indicates the association relationship between the first SRS resource set/the second SRS resource set and the SBFD time unit/the non-SBFD time unit, and the transmission manner of the uplink signal. In this way, after receiving the SRS resource set indication information, the terminal device reinterprets the meaning of the 2 bits in the SRS resource set indication information in the first signaling (DCI). Examples are used below for description.

In an implementation, when the SRS resource set indication information is a first value, it indicates that the first SRS resource set is associated with the SBFD time unit and the second SRS resource set is associated with the non-SBFD time unit (namely, the first association relationship), and indicates the terminal device to send the first signal in the transmission manner 1. When the SRS resource set indication information is a second value, it indicates that the first SRS resource set is associated with the SBFD time unit and the second SRS resource set is associated with the non-SBFD time unit (namely, the first association relationship), and indicates the terminal device to send the first signal in the transmission manner 2. When the SRS resource set indication information is a third value, it indicates that the first SRS resource set is associated with the non-SBFD time unit and the second SRS resource set is associated with the SBFD time unit (namely, the second association relationship), and indicates the terminal device to send the first signal in the transmission manner 1. When the SRS resource set indication information is a fourth value, it indicates that the first SRS resource set is associated with the non-SBFD time unit and the second SRS resource set is associated with the SBFD time unit (namely, the second association relationship), and indicates the terminal device to send the first signal in the transmission manner 2. The first value, the second value, the third value, and the fourth value are different from each other. For example, the first value, the second value, the third value, and the fourth value may be one of "00", "01", "10", and "11".

In another possible implementation, the network device may select any four combinations from the foregoing described six combinations according to an actual requirement. For example, the selected four combinations are the combination #1, the combination #2, the combination #3, and the combination #4. Optionally, when the SRS resource set indication information field is a first value, the combination #1 is indicated; when the 2 bits are a second value, the combination #2 is indicated; when the 2 bits are a third value, the combination #3 is indicated; and when the 2 bits are a fourth value, the combination #4 is indicated, where the first value, the second value, the third value, and the fourth value are different from each other. For example, the first value, the second value, the third value, and the fourth value may be one of "00", "01", "10", and "11".

In another possible solution, the first signaling (DCI) includes the first field, and the length of the first field is 3 bits. The first field indicates the association relationship between the first SRS resource set/the second SRS resource set and the SBFD time unit/the non-SBFD time unit, and the transmission manner of the uplink signal. In this way, after receiving the SRS resource set indication information, the terminal device obtains the association relationship and the transmission manner based on the first field.

Optionally, when the first field is a first value, it indicates that the first SRS resource set is associated with the SBFD time unit and the second SRS resource set is associated with the non-SBFD time unit (namely, the first association relationship), and indicates the terminal device to send the first signal in the transmission manner 1 and the terminal device to send the first signal only in the time unit associated with the first SRS resource (that is, send the first signal only in the SBFD time unit). When the first field is a second value, it indicates that the first SRS resource set is associated with the SBFD time unit and the second SRS resource set is associated with the non-SBFD time unit (namely, the first association relationship), and indicates the terminal device to send the first signal in the transmission manner 1 and the terminal device to send the first signal only in the time unit associated with the second SRS resource (that is, send the first signal only in the non-SBFD time unit). When the first field is a third value, it indicates that the first SRS resource set is associated with the non-SBFD time unit and the second SRS resource set is associated with the SBFD time unit (namely, the second association relationship), and indicates the terminal device to send the first signal in the transmission manner 1 and the terminal device to send the first signal only in the time unit associated with the first SRS resource (that is, send the first signal only in the non-SBFD time unit). When the first field is a fourth value, it indicates that the first SRS resource set is associated with the non-SBFD time unit and the second SRS resource set is associated with the SBFD time unit (namely, the second association relationship), and indicates the terminal device to send the first signal in the transmission manner 1 and the terminal device to send the first signal only in the time unit associated with the second SRS resource (that is, send the first signal only in the SBFD time unit). When the first field is a fifth value, it indicates that the first SRS resource set is associated with the SBFD time unit and the second SRS resource set is associated with the non-SBFD time unit (namely, the first association relationship), and indicates the terminal device to send the first signal in the transmission manner 2. When the first field is a sixth value, it indicates that the first SRS resource set is associated with the non-SBFD time unit and the second SRS resource set is associated with the SBFD time unit (namely, the second association relationship), and indicates the terminal device to send the first signal in the transmission manner 2. The first value, the second value, the third value, the fourth value, the fifth value, and the sixth value are different from each other. For example, the first value, the second value, the third value, and the fourth value may be one of "000", "001", "010", "011", "100", and "101".

The method 700 is described in detail above. It can be learned that, in the method, the terminal device can ensure, based on the first association relationship or the second association relationship, that the SBFD time unit and the non-SBFD time unit are respectively associated with different SRS resource sets, to ensure that the first signal is sent in the SBFD time unit and the non-SBFD time unit by using different spatial domain parameters.

It may be understood that the method 700 may be applied to a single (Single) TRP scenario, or may be applied to an mTRP scenario.

Optionally, in a single TRP scenario, the network device in the method 700 may be considered as a TRP.

Optionally, in an mTRP scenario, the network device in S730 may include a first network device (for example, a first TRP) and a second network device (for example, a second TRP). However, it should be noted that, in this scenario, the network device in S710 may be the first network device or the second network device. This is not limited in this application.

The method is different from the method 700 in that, in S730, the first signal sent by the terminal device in the non-SBFD time unit is sent to the first network device, and the first signal sent by the first signal in the SBFD time unit is sent to the second network device. Correspondingly, the first network device receives the first signal only in the SBFD time unit, and the second network device receives the first signal only in the non-SBFD time unit. This method can ensure compatibility between SBFD and mTRP.

For example, if the association relationship is the first association relationship, the first network device receives the first signal only in the SBFD time unit, and the second network device receives the first signal only in the non-SBFD time unit. This may also be understood as that the first network device receives the first signal in the time unit associated with the first SRS resource set, and the second network device receives the first signal in the time unit associated with the second SRS resource set.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiment, methods and operations implemented by a device (for example, the network device or the terminal device) may alternatively be implemented by a component (for example, a chip or a circuit) of the device.

The foregoing describes the method provided in embodiments of this application in detail with reference to FIG. 1 to FIG. 8A to FIG. 8C. The method is mainly described from a perspective of interaction between the network device and the terminal device. It may be understood that to implement the foregoing functions, the network device and the terminal device include corresponding hardware structures and/or software modules for implementing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

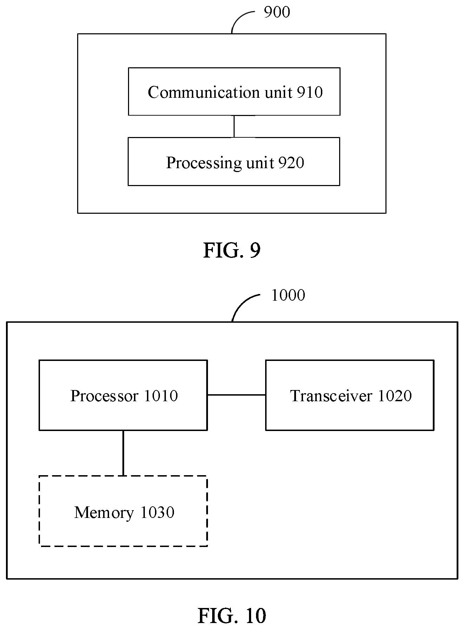

The following describes in detail the communication apparatus provided in embodiments of this application with reference to FIG. 9 and FIG. 10. It should be understood that descriptions of an apparatus embodiment correspond to the descriptions of the method embodiment. Therefore, for content that is not described in detail, refer to the foregoing method embodiment. For brevity, details of a part of content are not described again. In embodiments of this application, functional modules of the network device and the terminal device may be divided based on the foregoing method example. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the uplink transmission method provided in this application, and the following describes the communication apparatus provided in this application. In a possible implementation, the apparatus is configured to implement the steps or procedures corresponding to the terminal device in the foregoing method embodiment. In another possible implementation, the apparatus is configured to implement the steps or procedures corresponding to the network device in the foregoing method embodiment.

FIG. 9 is a block diagram of a communication apparatus 900 according to an embodiment of this application. As shown in FIG. 9, the apparatus 900 may include a communication unit 910 and a processing unit 920. The communication unit 910 may communicate with the outside, and the processing unit 920 is configured to process data. The communication unit 910 may also be referred to as a communication interface or a transceiver unit.

In a possible design, the apparatus 900 may implement the steps or the procedures performed by the network device in the foregoing method embodiment. The processing unit 920 is configured to perform a processing-related operation of the network device in the foregoing method embodiment. The communication unit 910 is configured to perform a sending-related operation of the network device in the foregoing method embodiment.

In another possible design, the apparatus 900 may implement the steps or the procedures performed by the terminal device in the foregoing method embodiment correspondingly. The communication unit 910 is configured to perform a receiving-related operation of the terminal device in the foregoing method embodiment. The processing unit 920 is configured to perform a processing-related operation of the terminal device in the foregoing method embodiment.

It should be understood that the apparatus 900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the network device in the foregoing embodiments, and may be configured to perform the procedures and/or the steps corresponding to the network device in the foregoing method embodiment. Alternatively, the apparatus 900 may be specifically the terminal device in the foregoing embodiments, and may be configured to perform the procedures and/or the steps corresponding to the terminal device in the foregoing method embodiment. To avoid repetition, details are not described herein again.

The apparatus 900 in the foregoing solutions has a function of implementing corresponding steps performed by the network device in the foregoing method, or the apparatus 900 in the foregoing solutions has a function of implementing corresponding steps performed by the terminal device in the foregoing method. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiment.

In addition, alternatively, the communication unit may be a transceiver circuit (for example, may include a receiving circuit and a sending circuit), and the processing unit may be a processing circuit. In this embodiment of this application, the apparatus in FIG. 9 may be the terminal device or the network device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 10 is a block diagram of a communication apparatus 1000 according to an embodiment of this application. The apparatus 1000 includes a processor 1010 and a transceiver 1020. The processor 1010 and the transceiver 1020 communicate with each other through an internal connection path. The processor 1010 is configured to execute instructions, to control the transceiver 1020 to send a signal and/or receive a signal.

Optionally, the apparatus 1000 may further include a memory 1030. The memory 1030 communicates with the processor 1010 and the transceiver 1020 through the internal connection path. The memory 1030 is configured to store the instructions, and the processor 1010 may execute the instructions stored in the memory 1030. In a possible implementation, the apparatus 1000 is configured to implement procedures and steps corresponding to the network device in the foregoing method embodiment. In another possible implementation, the apparatus 1000 is configured to implement procedures and steps corresponding to the terminal device in the foregoing method embodiment.

It should be understood that the apparatus 1000 may be specifically the network device or the terminal device in the foregoing embodiments, or may be a chip or a chip system. Correspondingly, the transceiver 1020 may be a transceiver circuit of the chip. This is not limited herein. Specifically, the apparatus 1000 may be configured to perform the steps and/or the procedures corresponding to the network device or the terminal device in the foregoing method embodiment. Optionally, the memory 1030 includes a read-only memory and a random access memory, and provides instructions and data for the processor. A part of the memory may further include a non-volatile random access memory. For example, the memory may further store information of a device type. The processor 1010 may be configured to execute the instructions stored in the memory. In addition, when the processor 1010 executes the instructions stored in the memory, the processor 1010 is configured to perform the steps and/or the procedures corresponding to the network device or the terminal device in the foregoing method embodiment.

In an implementation process, the steps in the foregoing method can be completed by using a hardware integrated logic circuit in the processor or by using instructions in a form of software. The steps of the method disclosed with reference to embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiment can be completed by using a hardware integrated logic circuit in the processor, or by using instructions in a form of software. The processor may be a general-purpose processor, a digital signal processor (digital signal processing, DSP), an ASIC, a field-programmable gate array (field-programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor, or the like. The steps of the method disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the system and method described in this specification include but are not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, the operations and/or the procedures performed by the network device or the terminal device in the method embodiment of this application are performed.

This application further provides a computer program product. The computer program product includes computer program code or instructions. When the computer program code or the instructions are run on a computer, the operations and/or the procedures performed by the terminal device or the network device in the method embodiment of this application are performed.

In addition, this application further provides a chip. The chip includes a processor. A memory configured to store a computer program is disposed independent of the chip. The processor is configured to execute the computer program stored in the memory, so that the operations and/or the processing performed by the network device or the terminal device in any method embodiment are/is performed.

Further, the chip may include a communication interface. The communication interface may be an input/output interface, an interface circuit, or the like. Further, the chip may include the memory.

In addition, this application further provides a communication system. The communication system includes the network device and the terminal device in embodiments of this application.

It should be further noted that, the memory described in this specification is intended to include, but is not limited to, these memories and any memory of another appropriate type.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiment. Details are not described herein again. In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or the units may be implemented in electrical, mechanical, or another form. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that, in this application, both "when" and "if" mean that a network element performs corresponding processing in an objective situation, but do not constitute a limitation on time, do not require that the network element has a determining action during implementation, and do not mean another limitation either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink transmission method, comprising:
receiving first signaling from a network device, wherein the first signaling indicates to send a first signal, and the first signal is carried on a physical uplink shared channel PUSCH;
determining that an association relationship between a first sounding reference signal SRS resource set/a second SRS resource set and a subband full duplex SBFD time unit/a non-SBFD time unit is a first association relationship or a second association relationship, wherein the first SRS resource set and the second SRS resource set are two SRS resource sets configured by the network device for a terminal device, the first association relationship is that the first SRS resource set is associated with the SBFD time unit, and the second SRS resource set is associated with the non-SBFD time unit, and the second association relationship is that the first SRS resource set is associated with the non-SBFD time unit, and the second SRS resource set is associated with the SBFD time unit; and
sending the first signal in the SBFD time unit based on an SRS resource set associated with the SBFD time unit, and/or sending the first signal in the non-SBFD time unit based on an SRS resource set associated with the non-SBFD time unit.

2. The method according to claim 1, wherein determining that the association relationship between the first SRS resource set/the second SRS resource set and the SBFD time unit/the non-SBFD time unit is the first association relationship or the second association relationship comprises:
receiving first information from the network device, wherein the first information indicates the first association relationship or the second association relationship; and
determining, based on the first information, that the association relationship between the first SRS resource set/the second SRS resource set and the SBFD time unit/the non-SBFD time unit is the first association relationship or the second association relationship.

3. The method according to claim 2, wherein the first information is carried in second signaling, and the second signaling is radio resource control RRC signaling; or the first information is carried in an SRS resource set indication information field in the first signaling, and the first signaling is downlink control information DCI.

4. The method according to claim 1, wherein the first SRS resource set comprises a first field and/or the second SRS resource set comprises a second field, the first field indicates that the first SRS resource set is associated with the SBFD time unit or the non-SBFD time unit, the second field indicates that the second SRS resource set is associated with the SBFD time unit or the non-SBFD time unit, and the time units associated with the first SRS resource set and the second SRS resource set are of different types; and
determining that the association relationship between the first SRS resource set/the second SRS resource set and the SBFD time unit/the non-SBFD time unit is the first association relationship or the second association relationship comprises:
determining, based on the first field and/or the second field, that the association relationship between the first SRS resource set/the second SRS resource set and the SBFD time unit/the non-SBFD time unit is the first association relationship or the second association relationship.

5. The method according to claim 1, wherein determining that the association relationship between the first SRS resource set/the second SRS resource set and the SBFD time unit/the non-SBFD time unit is the first association relationship or the second association relationship comprises:
if the first SRS resource set is an SRS resource set dedicated for SBFD, determining that the association relationship between the first SRS resource set/the second SRS resource set and the SBFD time unit/the non-SBFD time unit is the first association relationship;
or
if the second SRS resource set is an SRS resource set dedicated for SBFD, determining that the association relationship between the first SRS resource set/the second SRS resource set and the SBFD time unit/the non-SBFD time unit is the second association relationship.

6. The method according to any one of claims 1 to 5, wherein the method further comprises:
receiving second information from the network device, wherein the second information indicates to transmit the first signal in a first transmission manner or a second transmission manner, the first transmission manner indicates to send the first signal in the SBFD time unit or the non-SBFD time unit, and the second transmission manner indicates to send the first signal in the SBFD time unit and the non-SBFD time unit; and
determining, based on the second information, to transmit the first signal in the first transmission manner or the second transmission manner.

7. The method according to claim 6, wherein the second information is carried in the SRS resource set indication information field in the first signaling, and the first signaling is downlink control information DCI.

8. The method according to claim 6 or 7, wherein the method further comprises:
receiving third information from the network device, wherein the third information indicates to transmit the first signal in the first transmission manner, or the third information indicates to transmit the first signal in the second transmission manner, or the third information indicates to transmit the first signal based on the second information.

9. The method according to claim 8, wherein the third information is carried in the second signaling, and the second signaling is radio resource control RRC signaling.

10. An uplink transmission method, comprising:
sending first signaling to a terminal device, wherein the first signaling indicates to send a first signal, and the first signal is carried on a physical uplink shared channel PUSCH; and
receiving the first signal in a subband full duplex SBFD time unit, and/or receiving the first signal in a non-SBFD time unit, wherein the first signal received in the SBFD time unit is transmitted based on one sounding reference signal SRS resource set associated with the SBFD time unit in two SRS resource sets configured for the terminal device, and the first signal received in the non-SBFD time unit is transmitted based on one SRS resource set associated with the non-SBFD time unit in the two SRS resource sets;
the two SRS resource sets comprise a first SRS resource set and a second SRS resource set, and an association relationship between the two SRS resource sets and the SBFD time unit and the non-SBFD time unit is a first association relationship or a second association relationship; and
the first association relationship is that the first SRS resource set is associated with the SBFD time unit, and the second SRS resource set is associated with the non-SBFD time unit; and the second association relationship is that the first SRS resource set is associated with the non-SBFD time unit, and the second SRS resource set is associated with the SBFD time unit.

11. The method according to claim 10, wherein the method further comprises:
sending first information to the terminal device, wherein the first information indicates the first association relationship or the second association relationship.

12. The method according to claim 11, wherein the first information is carried in second signaling, and the second signaling is radio resource control RRC signaling; or the first information is carried in an SRS resource set indication information field in the first signaling, and the first signaling is downlink control information DCI.

13. The method according to claim 10, wherein the first SRS resource set comprises a first field and/or the second SRS resource set comprises a second field, the first field indicates that the first SRS resource set is associated with the SBFD time unit or the non-SBFD time unit, the second field indicates that the second SRS resource set is associated with the SBFD time unit or the non-SBFD time unit, and the time units associated with the first SRS resource set and the second SRS resource set are of different types.

14. The method according to claim 10, wherein
the first SRS resource set is an SRS resource set dedicated for SBFD; or the second SRS resource set is an SRS resource set dedicated for SBFD.

15. The method according to any one of claims 10 to 14, wherein the method further comprises:
sending second information to the terminal device, wherein the second information indicates to transmit the first signal in a first transmission manner or a second transmission manner, the first transmission manner indicates to send the first signal in the SBFD time unit or the non-SBFD time unit, and the second transmission manner indicates to send the first signal in the SBFD time unit and the non-SBFD time unit.

16. The method according to claim 15, wherein the second information is carried in the SRS resource set indication information field in the first signaling, and the first signaling is downlink control information DCI.

17. The method according to claim 15 or 16, wherein the method further comprises:
sending third information to the terminal device, wherein the third information indicates to transmit the first signal in the first transmission manner, or the third information indicates to transmit the first signal in the second transmission manner, or the third information indicates to transmit the first signal based on the second information.

18. The method according to claim 17, wherein the third information is carried in the second signaling, and the second signaling is radio resource control RRC signaling.

19. A communication apparatus, wherein the communication apparatus comprises a module configured to perform the method according to any one of claims 1 to 9, or comprises a module configured to perform the method according to any one of claims 10 to 18.

20. A communication apparatus, comprising at least one processor, wherein
the at least one processor is configured to execute a computer program stored in a memory, to enable the apparatus to perform the method according to any one of claims 1 to 9, or enable the apparatus to perform the method according to any one of claims 10 to 18.

21. A computer-readable storage medium, wherein the computer-readable storage medium stores a computer program; and when the computer program is run on a computer, the computer is enabled to perform the method according to any one of claims 1 to 9, or the computer is enabled to perform the method according to any one of claims 10 to 18.
